# EUROPÄISCHE PATENTANMELDUNG

(11) **EP 1 748 236 A1**
(43) Veröffentlichungstag der Anmeldung: **31.01.2007**
(21) Anmeldenummer: 05016212.2
(22) Anmeldetag: 26.07.2005
(51) Int. Cl.: F16K 17/30, B66F 9/22

(54) **Ventilvorrichtung und Hydraulik**

(71) Anmelder: HAWE Hydraulik GmbH & Co. KG, 81673 München (DE)
(72) Erfinder: Heusser, Martin, Dipl.-Ing. Univ., 81245 München (DE)
(74) Vertreter: Grünecker, Kinkeldey, Stockmair & Schwanhäusser Anwaltssozietät

(57) **Zusammenfassung**

Eine Ventilvorrichtung (VV) zur Leitungsbruchsicherung für Hydraulikgeräte weist ein im Ruhezustand durch eine Feder (8) von einem Sitz (5) abgehobenes, einen Durchflussquerschnitt (Q) vorbestimmter Größe freihaltendes Stau-Ventilelement (EV) auf, das im Sicherheitsfall bei einem vorbestimmten Volumenstrom an den Sitz anlegbar ist, wobei das Stau-Ventilelement mit einem aktiven Wandbereich eine Drosselstrecke (DR) für den Volumenstrom begrenzt. Die Ventilvorrichtung (VV) weist durch einen relativ zu einem ein weitestgehend viskositätsunabhängiges Ansprechverhalten generierenden aktiven Teil des Wandbereichs erheblich vergrößerten aktiven Teil (AV) des Wandbereichs des Stau-Ventilelements (EV) ein eindeutig viskositätsabhängiges Ansprechverhalten auf. In einem Hydraulikgerät (G) stellt die Ventilvorrichtung (VV) dank des viskositätsabhängigen Ansprechverhaltens bei niedrigen Temperaturen eine vorbestimmte Logik der Bewegungsfolge mehrerer Hydroverbraucher (V1, V2) sicher.

## Beschreibung

Die Erfindung betrifft eine Ventilvorrichtung der im Oberbegriff des Patentanspruchs 1 angegebenen Art sowie ein Hydraulikgerät gemäß Oberbegriff des Patentanspruchs 13.

Solche Ventilvorrichtungen sind als Leitungsbruchsicherungen bereits seit Jahrzehnten in der Hochdruckhydraulik übliches Zubehör. Die Leitungsbruchsicherung verhindert eine nicht kontrollierbare, beschleunigte Bewegung eines belasteten Hydroverbrauchers (Absturz), sobald bei einem Bruch der druckführenden Leitung oder Leitungsverbindung der hydraulische Gegendruck wegfällt. Bei einer Version funktioniert die Ventilvorrichtung wie ein Rückschlagventil, das die Last hält. In der anderen Version ist eine Blende vorgesehen, die bei Ansprechen im Sicherheitsfall dennoch einen kleinen Strom durchlässt, so dass die Last langsam abgesenkt wird. Im Ruhezustand der Ventilvorrichtung wird in einer Drosselstrecke ein Durchflussquerschnitt mit vorbestimmtem Durchflussquerschnitt freigehalten. Der Durchflusswiderstand und die Stauwirkung an dem federbelasteten Stau-Ventilelement liegen in ihrer Kraftwirkung bei Normalbetrieb unterhalb der Gegenkraft der Feder. Übersteigen die Strömungskräfte im Sicherheitsfall die Federkraft, dann schließt die Ventilvorrichtung augenblicklich.

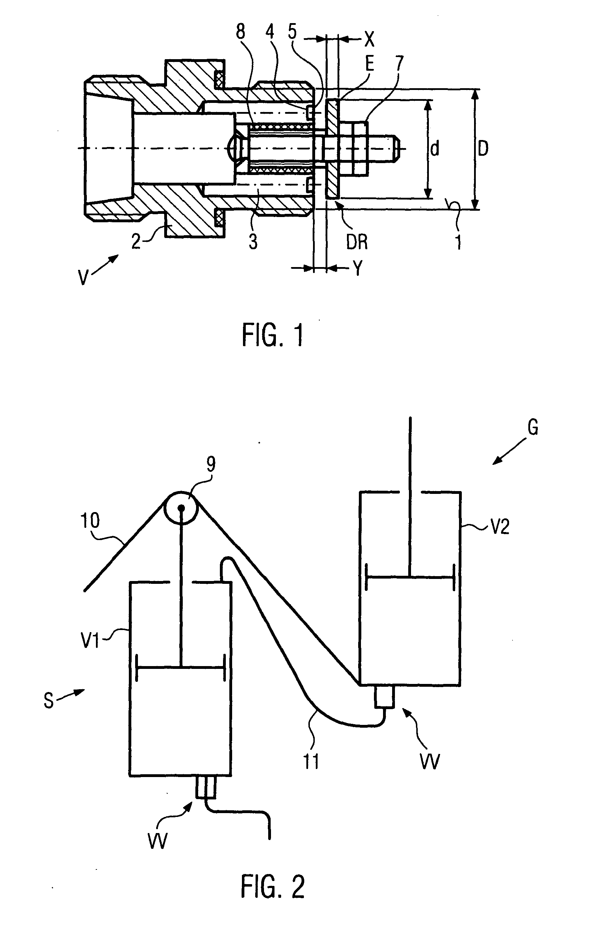

Solche Ventilvorrichtungen sind als Einschraubventile oder mit Gehäusen üblich. Die Druckschrift D 6990 (Leitungsbruchsicherung LB) vom Januar 2000, der Firma HAWE Hydraulik GmbH & Co. KG beschreibt und zeigt einige Typen solcher Leitungsbruchsicherungen und offenbart auch zugehörige allgemeine und hydraulische Kenngrößen. Eine Ausführungsform mit Hauptbestandteilen dieser bekannten Leitungsbruchsicherung ist auch in Fig. 1 gezeigt. Ein Einschraubgehäuse 2 wird mit einem Gewindeabschnitt in eine Kammer eingeschraubt, die eine zylindrische Innenwand 1 mit einem Durchmesser D aufweist. In dem Einschraubgehäuse 2 sind axiale, in einem Sitz 5 mündende Durchgänge 3 vorgesehen, die über eine Umfangsnut 4 im Sitz 5 miteinander verbunden sind. Im Zentrum des Einschraubgehäuses 2 ist ein Bolzen 6 festgelegt, der ein Stau-Ventilelement E mit der Form einer Kreisringscheibe mit einem Außendurchmesser d verschiebbar führt. Zwischen dem Stau-Ventilelement E und dem Sitz S ist ein Spalt Y vorbestimmter Größe eingestellt, beispielsweise durch Kontermuttem 7 auf dem Bolzen 6. Ferner ist zwischen dem Einschraubgehäuse 2 und dem Stau-Ventilelement eine vorgespannte Feder 8 eingesetzt. Das Stau-Ventilelement E definiert unter anderem mit der Innenwand 1 eine Drosselstrecke DR mit bestimmtem Durchflussquerschnitt Q. Beispielsweise betragen die Durchmesser D und d 11,5 mm und 9,5 mm. Die axiale Stärke X des Stau-Ventilelements liegt zwischen 0,6 und 1,0 mm. Der Außenumfangsrand des Stau-Ventilelements E definiert in der Drosselstrecke D einen für die Drosselwirkung mit der Innenwand 1 aktiven Teil A eines Wandbereichs. Ein weiterer Teil des aktiven Wandbereichs liegt am Stau-Ventilelement an dessen zum Sitz 5 weisender Oberseite. Die Größe des Teils A des aktiven Wandbereichs beträgt etwa 50 bis 75 % der Fläche des Durchflussquerschnitts Q. Aufgrund dieses Verhältnisses von etwa 1 : 2, oder weniger, d.h. einer relativ scharfkantigen Drosselöffnung, hat die bekannte Ventilvorrichtung V ein weitestgehend viskositätsunabhängiges Ansprechverhalten.

Es gibt in der Praxis in Hydraulikgeräten Einsatzfälle für solche Leitungsbruchsicherungen, in denen mehrere Hydroverbraucher hydraulisch in Serie geschaltet sind, derart, dass beispielsweise die Druckseite eines Hydroverbrauchers direkt mit der Zugseite des anderen Hydroverbrauchers verbunden ist, beispielsweise in einem Stapler (Fig. 2). Zumindest ein Hydroverbraucher wird durch eine Leitungsbruchsicherung abgesichert. In diesem Hydraulikgerät ist es erforderlich, dass die Hydroverbraucher zumindest in einer Bewegungsrichtung eine bestimmte relative Bewegungsfolge ausführen, beispielsweise derart, dass zuerst der eine Hydroverbraucher einfährt, und dann erst der andere, oder dass beide gleichzeitig einfahren. Die Praxis zeigt nun, dass die Temperatur des Hydraulikmediums oder die Arbeitstemperatur im Hydraulikgerät Einfluss auf die vorbestimmte Bewegungsfolge nimmt. Bei niedriger Temperatur, z.B. unterhalb 0°C, und/oder zähflüssigem Hydraulikmedium lässt sich die vorbestimmte Logik der Bewegungsfolge nämlich nicht erzielen. Die vorbestimmte Logik der Bewegungsfolge tritt erst bei normalen oder höheren Umgebungs- und/oder Betriebstemperaturen des Hydraulikmediums ein.

Der Erfindung liegt die Aufgabe zugrunde, eine temperaturabhängige unterschiedlich ansprechende Ventilvorrichtung sowie ein Hydraulikgerät anzugeben, bei dem die Temperatur keinen Einfluss auf das Betriebsverhalten nimmt.

Die gestellte Aufgabe wird mit den Merkmalen des Patentanspruchs 1 und des Patentanspruchs 13 gelöst.

Da in der Ventilvorrichtung der in der Drosselstrecke aktive Teil des Wandbereichs des Stau-Ventilelements so weit vergrößert ist, dass die Ventilvorrichtung eindeutig viskositätsabhängig anspricht, ändert sich das Ansprechverhalten mit der Temperatur. Durch den vergrößerten aktiven Wandbereich spielen nämlich physikalische und rheologische Einflüsse des Hydraulikmediums eine Rolle, die sie bei einem aktiven Wandbereich einer kleinen Größe, mit der sich ein viskositätsuaabhängiges Ansprechverhalten einstellt, nicht haben können. Diese Einflüsse sind zwar grundsätzlich bekannt, jedoch wurden sie für Leitungsbruchsicherungen oder Ventilvorrichtungen dieser Art bisher nicht in Betracht gezogen, d.h. die Aufgabe der Leitungsbruchsicherung wurde überhaupt nicht mit der Viskosität des Hydraulikmediums in Verbindung gebracht.

Das Hydraulikgerät zeichnet sich durch ein Betriebsverhalten aus, das durch Temperatureinflüsse nicht geändert wird. Die im Hydraulikgerät vorgesehene Leitungsbruchsicherung spricht nämlich bei niedriger Temperatur, z.B. unterhalb 0°C, in vorbestimmter Weise an, so dass eine die vorbestimmte Logik der Bewegungsfolge mittels der temperaturabhängigen Ventilvorrichtung gewährleistet wird, während die Logik bei normalen bzw. höheren Temperaturen ohne Einfluss der Ventilvorrichtung ohnedies vorliegt. Bei niedrigen Temperaturen sorgt die Ventilvorrichtung dann für die Einhaltung der Logik, wenn das Hydraulikgerät ohne Hilfe dazu nicht in der Lage ist. Bei höheren Temperaturen greift die Ventilvorrichtung in die Bewegungsfolge nicht mehr ein, weil dann das Hydraulikgerät selbst dafür sogt.

Bei einer zweckmäßigen Ausführungsform bildet eine Außenwand des Stau-Ventilelements mit einer mit Abstand benachbarten Innenwand der das Stau-Ventilelement enthaltenden Kammer zumindest einen Teil der Drosselstrecke. Der vergrößerte Teil des aktiven Wandbereichs ist an oder in der Außenwand des Stau-Ventilelements ausgebildet, so dass dadurch das Hydraulikmedium entlang der Drosselstrecke eine eindeutig viskositätsabhängig varüerende Wirkung entwickelt, d.h. je zähflüssiger das Hydraulikmedium ist, desto früher schließt die Ventilvorrichtung, oder desto kleiner ist der Volumenstrom, der zum Schließen führt.

Baulich einfach kann das Stau-Ventilelement als Topfkolben ausgebildet sein, dessen Kolbenboden außenseitig zum Sitz weist, während die den vergrößerten Teil des aktiven Wandbereichs definierende Kolbenschürze vom Sitz weg weist. Das Stau-Ventilelement wird durch einen Vorsprung beweglich geführt, der z.B. den Hubweg definiert und auch die Drosselstrecke unveränderlich einstellt.

Bei einer anderen zweckmäßigen Ausführungsform wird zumindest ein Teil der Drosselstrecke zwischen einer Innenwand in einem Durchgang des Stau-Ventilelements und einer mit Abstand benachbarten Außenwand eines den Durchgang durchsetzenden Fortsatzes definiert, wobei der vergrößerte Teil des aktiven Wandbereichs an der Innenwand des Durchgangs ausgebildet ist. Diese Ausführungsform lässt sich herstellungs- und montagetechnisch zweckmäßig realisieren, wenn das Stau-Ventilelement zumindest einen zylindrischen Rohrabschnitt aufweist, den der zylindrische Vorsprung mit Spiel durchsetzt.

Zweckmäßig ist die Außenwand oder die Innenwand des Durchgangs des Stau-Ventilelements zylindrisch ausgebildet, wie, vorzugsweise, auch die Innenwand der Kammer bzw. die Außenwand des Vorsprungs.

Die Kolbenschürze des Topfkolbens sollte einen zum Kolbenboden parallelen Kolbenschürzenrand aufweisen, so dass die Drosselstrecke nicht nur in Umfangsrichtung eine gleichbleibende Weite besitzt, sondem in Umfangsrichtung auch überall axial gleich lang ist.

Bei eine altemativen Ausführungsform sind in der Außenwand der Kolbenschürze des Topfkolbens axial verlaufende Nuten vorgesehen, die den vergrößerten Teil des aktiven Wandbereichs des Stau-Ventilelements bilden, so dass kapillarartige Kanäle für den Volumenstrom vorliegen, in denen die Viskosität des Hydraulikmediums Einfluss auf das Ansprechverhalten der Ventilvorrichtung nimmt.

Die axiale Länge des vergrößerten Wandbereiches kann größer oder kleiner als der oder gleich dem Außendurchmesser des Stau-Ventilelements sein.

Zweckmäßig ist die Vorspannung der Feder einstellbar, um das Ansprechverhalten nach Bedarf ändern zu können.

Bei einer Ausführungsform ist im Stau-Ventilelement wenigstens eine zusätzliche Blendenöffnung vorgesehen und auf einen Strömungsdurchgang im Sitz ausgerichtet, so dass selbst bei geschlossener Ventilvorrichtung ein geringer Volumenstrom durchgehen kann.

Als Faustregel sollte der vergrößerte Teil des aktiven Wandbereichs etwa zwischen dem 2,5 bis 10-fachen der Querschnittsfläche in der Drosselstrecke betragen. Allerdings lässt sich bei bestimmten Bauformen auch schon mit einem geringer vergrößerten Teil des aktiven Wandbereichs oder auch noch mit einem noch mehr vergrößerten Teil des aktiven Wandbereichs die gewünschte Viskositätsabhängigkeit beim Ansprechverhalten der Ventilvorrichtung erzielen. Der restliche Teil des aktiven Wandbereichs, der am Stau-Ventilelement gegenüberliegend zum Sitz vorliegt, kann wie bei den bekannten Ventilvorrichtungen ausgebildet sein, oder, falls baulich möglich, ebenfalls vergrößert ausgebildet sein.

Ausführungsformen des Erfindungsgegenstandes werden anhand der Zeichnungen erläutert. Es zeigen:
- Fig. 1: einen Längsschnitt der Hauptkomponenten einer Ventilvorrichtung des Standes der Technik,
- Fig. 2: eine Schemadarstellung eines Hydraulikgeräts, das mit wenigstens einer erfindungsgemäßen Ventilvorrichtung ausgestattet ist,
- Fig. 3: einen Teilachsschnitt einer ersten Ausführungsform einer erfindungsgemäßen Ventilvorrichtung im Ruhezustand,
- Fig. 4: einen Teilachsschnitt einer weiteren Ausführungsform, im Ruhezustand,
- Fig. 5: einen Achsschnitt einer weiteren Ausführungsform, im Ruhezustand, und
- Fig. 6: einen Teilachsschnitt einer noch weiteren Ausführungsform.

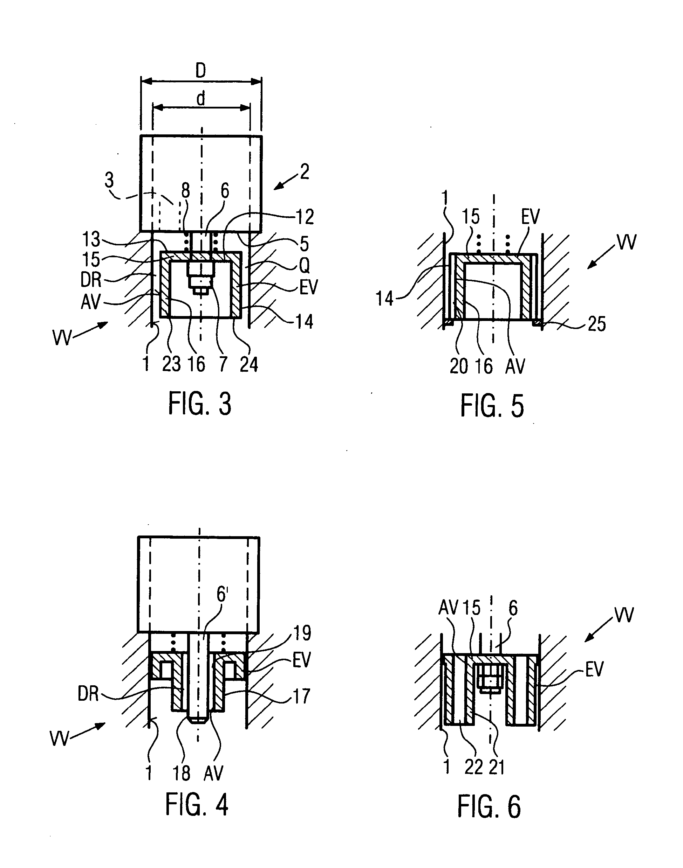

In den Fig. 3 bis 6 sind für Bauteile, die anhand Fig. 1 erläuterten Bauteilen entsprechen mit den gleichen Bezugszeichen hervorgehoben.

Bei der bekannten Ventilvorrichtung V in Fig. 1 beträgt als Beispiel für eine gängige Ausführung der Durchmesser D1 11,5 mm, während der Außendurchmesser d des Stau-Ventilelements E 9,5 mm beträgt. Die axiale Stärke des kreisringscheibenförmigen Stau-Ventilelements E liegt zwischen etwa 0,6 und 1,0 mm. Der aktive Teil des Wandbereichs des Stau-Ventilelements E am Außenrand beträgt somit etwa 50 % der Fläche des Durchflussquerschnitts in der Drosselstrecke DR zwischen der Innenwand 1 und dem Außenrand des Stau-Ventilelements E. Aufgrund dieses Flächenverhältnisses spricht die Ventilvorrichtung V viskositätsunabhängig an, d.h. bei zähflüssigem Hydraulikmedium beim gleichen Volumenstrom pro Zeiteinheit wie bei dünnflüssigem Hydraulikmedium. An der zum Sitz 5 weisenden Oberseite des Stau-Ventilelements E befindet sich ein weiterer Teil des aktiven Wandbereichs. Der Teil A und der andere Teil des Wandbereichs sind deshalb "aktiv", weil sie in der Drosselstrecke DR aktiv Strömungs- und Druckkräfte entstehen lassen, aus denen die Druckdifferenz über die Drosselstrecke DR entsteht, mit der das Stau-Ventilelement E schließlich in die Sperrstellung am Sitz 5 verstellt wird.

Fig. 2 verdeutlicht ein Hydraulikgerät G beispielsweise in einem Stapler mit zumindest zwei Hydroverbrauchem V1, V2. Der Hydroverbraucher V1 dient z.B. zum linearen Verstellen einer Umlenkung 9 für ein Zugelement 10, das die Höhenposition des zweiten Hydroverbrauchers V2 einstellt. Die Druckseite des zweiten Hydroverbrauchers V2 ist über eine Hydraulikleitung 11 mit der Zugseite des ersten Hydroverbrauchers V1 verbunden. Das Hydraulikgerät G muss beim Einfahren unter Last oder unter geringer Last eine bestimmte Logik der Bewegungsfolge haben, beispielsweise derart, dass zuerst der zweite Hydroverbraucher V2 einfährt, ehe der erste Hydroverbraucher V1 seine Einfahrbewegung beginnt, oder so dass beide gleichzeitig einfahren oder dgl.. Zumindest der zweite Hydroverbraucher V2 ist über eine Leitungsbruchsicherung abgesichert. Wäre als Leitungsbruchsicherung die Ventilvorrichtung V von Fig. 1 installiert, dann würde bei niedrigen Außentemperaturen oder niedriger Betriebstemperatur des Hydraulikmediums die Leitungsbruchsicherung so ansprechen wie bei betriebswarmem Hydraulikmedium. Allerdings träte bei niedrigeren Temperaturen, z.B. unter 0°C, die Logik der vorbestimmten Bewegungsfolge aus anderen Gründen nicht ein. Aus diesem Grund ist das Hydraulikgerät G mit einer erfindungsgemäßen Ventilvorrichtung W der Fig. 3 bis 6 ausgestattet, die viskositätsabhängig und damit abhängig von der Umgebungstemperatur oder der Betriebstemperatur des Hydraulikmediums verschieden anspricht. Auf diese Weise wird die vorbestimmte Logik der Bewegungsfolge des Hydraulikgeräts G unabhängig von der jeweiligen Temperatur sichergestellt, weil die Ventilvorrichtung W bei niedriger Temperatur früher schließt und die Logik sicherstellt, der die Hydroverbraucher ohne Eingriff der Ventilvorrichtung bei dieser Temperatur nicht folgen könnten.

Bei einer ersten Ausführungsform der Ventilvorrichtung W in Fig. 3 ist das Stau-Ventilelement EV, das auf dem als Bolzen im Einschraubgehäuse 2 festgelegten Vorsprung 6 verschieblich geführt und von der vorgespannten Feder 8 beaufschlagt wird, ein Topfkolben 16 mit einem Kolbenboden 15, der mit einer Dichtfläche 13 dem Sitz 5 zugewandt ist, und einer Kolbenschürze 23, die vom Sitz 5 wegweist. Die Kolbenschürze 23, deren unterer Rand 24 beispielsweise parallel zum Topfkolben 15 verläuft, hat eine Außenwand 14, die einen vergrößerten Teil AV des aktiven Wandbereichs in der Drosselstrecke DR mit der Innenwand 1 definiert. Im Kolbenboden 15 kann (als Option) eine Blendenöffnung 12 vorgesehen sein, die auf die Durchgänge 3 im Einschraubkörper 2 ausgerichtet ist. Der mögliche Hub des Stau-Ventilelements EV wird durch die Kontermuttern 7 begrenzt. Die axiale Länge des vergrößerten Teils AV des aktiven Wandbereichs kann etwa dem Außendurchmesser d des Stau-Ventilelements EV entsprechen, oder größer bzw. kleiner sein. Zweckmäßig beträgt der vergrößerte aktive Teil AV des Wandbereichs zwischen dem 2,5 bis 10-fachen der Durchflussfläche entlang der Drosselstrecke DR. Durch den derart vergrößerten Teil AV des aktiven Wandbereichs wird ein eindeutig viskositätsabhängiges Ansprechverhalten erzielt, wobei der vergrößerte Teil AV des aktiven Wandbereichs gegenüber dem aktiven Teil A des Wandbereichs in Fig. 1 dort für ein viskositätsunabhängiges Ansprechverhalten ganz deutlich vergrößert ist. Der vertileibende Teil des aktiven Wandbereichs an der Oberseite des Stau-Ventilelements EV kann bei gleichen Werten für D, d dem von Fig. 1 entsprechen.

Bei der Ausführungsform der viskositätsabhängig ansprechenden Ventilvorrichtung W in Fig. 4 ist das Stau-Ventilelement EV mit einem mittigen zylindrischen Rohrabschnitt 17 ausgebildet, den der Vorsprung 6' mit Spiel durchsetzt, so dass zwischen der Außenwand 18 des Vorsprungs 6' und der Innenwand 19 des Rohrabschnitts 17 die Drosselstrecke DR gebildet wird, in der die Innenwand 19 den vergrößerten Teil AV des aktiven Wandbereichs definiert. Der Außenumfang des Stau-Ventilelements EV ist z.B. mit einer leichten Gleitpassung an der Innenwand 1 axial geführt.

In der Ausführungsform der viskositätsabhängig ansprechenden Ventilvorrichtung W in Fig. 5 ist das Stau-Ventilelement EV als Topfkolben 16 ausgebildet, in dessen Außenwand 14 axial verlaufende Nuten 20 geformt sind, die in der Drosselstrecke D mit der Innenwand 1 den vergrößerten Teil AV des aktiven Wandbereichs definieren, z.B. nach Art von Kapillarkanälen. Das Stau-Ventilelement EV kann mit einer leichten Gleitpassung an der Innenwand 1 geführt sein, oder (nicht gezeigt) wie in Fig. 3 auf dem Vorsprung 6. Wird der Vorsprung 6 weggelassen, dann kann die Hubbegrenzung durch wenigstens einen Anschlag 25 in der Innenwand 1 gebildet werden.

Bei der Ausführungsform in Fig. 6 der vikositätsabhängig ansprechenden Ventilvorrichtung W sind am Stau-Ventilelement EV beispielsweise mehrere Rohrabschnitte 21 jeweils mit axialen Durchgängen 22 vorgesehen, deren Innenwände den vergrößerten Teil AV des aktiven Wandbereichs definieren. Das Stau-Ventilelement EV wird beispielsweise auf dem Vorsprung 6 geführt und im Hubweg begrenzt.

Grundsätzlich ist der sich in axialer Richtung erstreckende Teil AV des aktiven Wandbereichs deutlich vergrößert, um die Viskositätsabhängigkeit zu bewirken. Es könnte, falls baulich möglich, additiv oder altemativ auch der andere aktive Teil an der Oberseite des Stau-Ventilelements EV vergrößert werden.

## Patentansprüche

1. Ventilvorrichtung (VV) zur Leitungsbruchsicherung für Hydraulikgeräte (G), mit einem im Ruhezustand durch eine vorgespannte Feder (8) von einem Sitz (5) abgehobenen, einen Durchflussquerschnitt (Q) vorbestimmter Größe freihaltenden Stau-Ventilelement (EV), das im Sicherheitsfall bei Erreichen eines vorbestimmten Volumenstroms von Strömungskräften an den Sitz (5) anlegbar ist, wobei das Stau-Ventilelement (EV) eine Drosselstrecke (DR) mit zumindest einem im Volumenstrom aktiven Teil eines Wandbereichs der Drosselstrecke (DR) bildet, **dadurch gekennzeichnet, dass** die Ventilvorrichtung (VV) durch einen relativ zu einem ein weitestgehend viskositätsunabhängiges Ansprechverhalten generierenden aktiven Teil (A) des Wandbereichs erheblich vergrößerten aktiven Teil (AV) des Wandbereichs am Stau-Ventilelement (EV) ein eindeutig viskositätsabhängiges Ansprechverhalten aufweist.

2. Ventilvorrichtung nach Anspruch 1**, dadurch gekennzeichnet, dass** das Stau-Ventilelement (EV) eine zumindest überwiegend in Achsrichtung verlaufende Außenwand (14) aufweist, die mit einer mit Abstand benachbarten, ebenfalls im Wesentlichen in Achsrichtung verlaufenden Innenwand (1) einer das Stau-Ventilelement (EV) enthaltenden Kammer zumindest einen Teil der Drosselstrecke (DR) bildet, und dass der vergrößerte aktive Teil (AV) des Wandbereichs an oder in der Außenwand (14) ausgebildet ist.

3. Ventilvorrichtung nach Anspruch 1, **dadurch gekennzeichnet, dass** das Ventilelement (EV) in einem Durchgang (19) eine zumindest im Wesentlichen in Achsrichtung verlaufende Innenwand aufweist, die mit einer im Abstand benachbarten Außenwand (18) eines das Stau-Ventilelement (EV) im Durchgang (19) durchsetzenden Fortsatzes (6') zumindest einen Teil der Drosselstrecke (DR) bildet, und dass der vergrößerte aktive Teil (AV) des Wandbereichs an der Innenwand des Durchgangs (19) ausgebildet ist.

4. Ventilvorrichtung nach Anspruch 2 oder 3, **dadurch gekennzeichnet, dass** die Außenwand (14) bzw. die Innenwand des Durchgangs (19) des Stau-Ventilelements (EV) zylindrisch ausgebildet ist, wie, vorzugsweise, auch die Innenwand (1) der Kammer bzw. die Außenwand (18) des Vorsprungs (6').

5. Ventilvorrichtung nach Anspruch 1, **dadurch gekennzeichnet, dass** das Stau-Ventilelement (EV) als zylindrischer Topfkolben (16) mit einem Kolbenboden (15) und einer Kolbenschürze (23) ausgebildet ist, dessen Kolbenboden (15) außenseitig zum Sitz (5) weist, der auf dem im Sitz (5) festgelegten Vorsprung (6) beweglich geführt ist, und dessen den vergrößerten aktiven Teil (AV) des Wandbereichs definierende Kolbenschürze (23) vom Sitz (5) weg weist.

6. Ventilvorrichtung nach Anspruch 5, **dadurch gekennzeichnet, dass** der axiale Kolbenschürzenrand (24) parallel zum Kolbenboden (15) verläuft.

7. Ventilvorrichtung nach den Ansprüchen 1 und 3, **dadurch gekennzeichnet, dass** das Stau-Ventilelement (EV) wenigstens einen zylindrischen Rohrabschnitt (17) aufweist, den der zylindrische Vorsprung (6') mit Spiel durchsetzt.

8. Ventilvorrichtung nach Anspruch 5, **dadurch gekennzeichnet, dass** in der Außenwand (14) der Kolbenschürze (23) axial verlaufende Nuten (20) vorgesehen sind, die den vergrößerten aktiven Teil (AV) des Wandbereichs bilden.

9. Ventilvorrichtung nach wenigstens einem der vorhergehenden Ansprüche, **dadurch gekennzeichnet, dass** die axiale Länge des vergrößerten aktiven Teils (AV) des Wandbereichs größer oder kleiner als der oder in etwa gleich ist dem Außendurchmesser (d) des Stau-Ventilelements (EV), vorzugsweise des Topfkolbens (16).

10. Ventilvorrichtung nach wenigstens einem der vorhergehenden Ansprüche, **dadurch gekennzeichnet, dass** die Vorspannung der Feder (8) verstellbar ist.

11. Ventilvorrichtung nach wenigstens einem der vorhergehenden Ansprüche, **dadurch gekennzeichnet, dass** im Stau-Ventilelement (EV) wenigstens eine zusätzliche Blendenöffnung (12) vorgesehen und auf einen Durchgang (3) im Sitz (5) ausgerichtet ist.

12. Ventilvorrichtung nach wenigstens einem der vorhergehenden Ansprüche, **dadurch gekennzeichnet, dass** der vergrößerte aktive Teil (AV) des Wandbereichs etwa dem 2,5 bis 10-fachen der Querschnittsfläche in der Drosselstrecke (DR) entspricht.

13. Hydraulikgerät (G), insbesondere in einem Stapler, mit mindestens zwei Hydroverbrauchem (V1, V2), bei denen eine Beaufschlagungsseite eines Hydroverbrauchers (V2) über eine Ventilvorrichtung zur Leitungsbruchsicherung mit einer gegensinnigen Beaufschlagungsseite eines anderen Hydroverbrauchers (V1) verbunden ist und für die Hydroverbraucher (V1, V2) zumindest in einer Bewegungsrichtung eine bestimmte Logik der Bewegungsfolge vorgeschrieben ist, **dadurch gekennzeichnet, dass** die Ventilvorrichtung (VV) zur Sicherstellung der vorbestimmten Logik der Bewegungsfolge der Hydroverbraucher (V1, V2) bei niedrigen Temperaturen mit einem eindeutig viskositätsabhängigen Ansprechverhalten ausgebildet ist.
